# EUROPEAN PATENT APPLICATION

(11) **EP 4 027 604 A1**
(43) Date of publication of application: **13.07.2022**
(21) Application number: 20880280.1
(22) Date of filing: 25.09.2020
(51) Int. Cl.: H04L 29/06

(54) **SECURITY VULNERABILITY DEFENSE METHOD AND DEVICE**

(30) Priority: 22.10.2019 CN 201911007623
(71) Applicant: Huawei Technologies Co., Ltd., Longgang District Shenzhen, Guangdong 518129 (CN)
(72) Inventor: JIANG, Wu, Shenzhen, Guangdong 518129, (CN)
(74) Representative: MERH-IP Matias Erny Reichl Hoffmann Patentanwälte PartG mbB
(86) International application number: PCT/CN2020/117834
(87) International publication number: WO 2021/077987

(57) **Abstract**

A security vulnerability defense method and device are provided, where the method includes: obtaining, by a vulnerability management device, asset information of an asset of a first network device, where the asset information includes an asset identifier, an asset model, and an asset version, and the first network device is located in a range of a controlled network; obtaining, by the vulnerability management device based on the asset model and the asset version in the asset information, vulnerability information corresponding to the asset information; and determining, by the vulnerability management device, a vulnerability response playbook (playbook) corresponding to the vulnerability information, where the vulnerability response playbook is used to execute a vulnerability defense policy for the first network device after being parsed. By performing the method, a security vulnerability existing in the network device can be quickly matched and discovered, a vulnerability defense policy can be generated and executed in a timely manner, and emergency protection is performed on the network device, so as to prevent the network device from being attacked before a vulnerability patch is received and affecting operation security of a network.

## Description

This application claims priority to Chinese Patent Application No. 201911007623.0, filed with the China National Intellectual Property Administration on October 22, 2019 and entitled "SECURITY VULNERABILITY DEFENSE METHOD AND DEVICE", which is incorporated herein by reference in its entirety.

### TECHNICAL FIELD

This application relates to the field of network security, and in particular, to a security vulnerability defense method and device.

### BACKGROUND

Security vulnerability, also referred to as vulnerability (vulnerability), means security defects in a computer system, and poses a threat to confidentiality, integrity, availability, access control, and the like of the computer system or application data of the computer system. The defects include defects in computer hardware, software, and specific implementation of a communications protocol or a security policy of a computer.

To improve security of network operation, a conventional technology uses a vulnerability scanning technology to monitor and scan a network, so as to discover a security vulnerability in the network in a timely manner. For example, vulnerability scanning software scans a key network device in the network, and reports information such as a security vulnerability and a security configuration level that exist in the network device and that are found in a scanning process to a network management system. The network management system delivers a security patch to the corresponding network device based on a received scanning result, to repair a vulnerability that exists in the network device. The network management system stores a security patch, or the network management system obtains a security patch from a third-party security patch provider through the network based on a vulnerability model. For example, for a security vulnerability found in application software, the network management system downloads a corresponding patch and the like from a technical support website of an application software developer based on a version of the application software. However, for some new vulnerabilities, the application software developer may not be able to provide a patch in a timely manner, and patch development usually takes a relatively long time. As a result, there is window duration for security disposal and defense of a vulnerability in the current network. During the window duration, the network is quite vulnerable to hacker attacks, and this affects secure operation of the network. Even if the application software developer speeds up patch development, network security is difficult to guarantee as a quantity of zero-day vulnerabilities that are maliciously exploited immediately after being found increases.

### SUMMARY

Embodiments of this application provide a security vulnerability defense method and device, so as to improve timeliness of performing emergency disposal and defense on a network, and reduce a possibility of attacking the network.

According to a first aspect, a security vulnerability defense method is provided. The method includes: obtaining, by a vulnerability management device, asset information of an asset of a first network device, where the asset information includes an asset identifier, an asset model, and an asset version, and the first network device is located in a range of a controlled network; obtaining, by the vulnerability management device based on the asset model and the asset version in the asset information, vulnerability information corresponding to the asset information; and determining, by the vulnerability management device, a vulnerability response playbook (playbook) corresponding to the vulnerability information, where the vulnerability response playbook is used to execute a vulnerability defense policy for the first network device after being parsed.

The embodiments of this application provide a security vulnerability defense method based on the vulnerability response playbook by using an advantage of rapid and flexible development of the vulnerability response playbook compared with a security patch. Specifically, the vulnerability management device obtains a corresponding vulnerability response playbook based on a security vulnerability of an asset on the network device in the controlled network, and further executes a vulnerability defense policy on the network device based on the obtained vulnerability response playbook. The method is used to prevent the network from being attacked through automatic response with emergency disposal and defense of the network before the security patch is available, for example, before a software developer or a third-party security patch provider releases a security patch or an effective security policy for a security vulnerability of the network. This improves robustness and security of the network.

In a possible design, the obtaining vulnerability information corresponding to the asset information includes: finding, by the vulnerability management device based on the asset model and the asset version in the asset information, vulnerability information corresponding to the asset model and the asset version in the asset information in a correspondence between the vulnerability information and a combination of the asset model and the asset version; and determining, by the vulnerability management device, a correspondence between the asset identifier and the vulnerability information based on the correspondence between the vulnerability information and the combination of the asset model and the asset version, and the asset identifier, the asset model, and the asset version in the asset information.

A correspondence between an asset identifier and vulnerability information is determined based on matching between an asset model and an asset version, so that a network device on which a vulnerability defense policy needs to be executed is determined subsequently, and accuracy of vulnerability defense is ensured.

In a possible design, the determining, by the vulnerability management device, a vulnerability response playbook (playbook) corresponding to the vulnerability information includes: determining, by the vulnerability management device based on the correspondence between the asset identifier and the vulnerability information and the correspondence between the vulnerability information and the vulnerability response playbook, the vulnerability response playbook corresponding to the asset identifier in the asset information; and using the determined vulnerability response playbook as the vulnerability response playbook corresponding to the vulnerability information.

In a possible design, the method further includes: parsing, by the vulnerability management device, the vulnerability response playbook to obtain the vulnerability defense policy; and sending, by the vulnerability management device, the vulnerability defense policy to the first network device based on the asset identifier in the asset information, so that the first network device executes the vulnerability defense policy.

The vulnerability management device may directly send the vulnerability response playbook to the first network device, and the first network device obtains the vulnerability defense policy after parsing the vulnerability response playbook, and executes the vulnerability defense policy. In this manner, the vulnerability management device omits a step of parsing the vulnerability response playbook, and this decreases a processing load on the vulnerability management device. However, the first network device needs to support a function of parsing the vulnerability response playbook, and has a relatively high performance requirement on the first network device. The vulnerability management device may also send the vulnerability defense policy to the first network device after parsing the vulnerability response playbook to obtain the vulnerability defense policy. In this manner, the vulnerability management device performs the step of parsing the vulnerability response playbook, and this increases the processing load on the vulnerability management device. However, the first network device does not need to support the function of parsing the vulnerability response playbook, and has a relatively low performance requirement on the first network device. In actual application, one of the foregoing two manners may be flexibly selected based on hardware conditions of the network device and the vulnerability management device.

In a possible design, the asset identifier in the asset information is a global asset identifier, the global asset identifier includes a device identifier of the first network device, and the global asset identifier is unique in the range of the controlled network; and before the sending the vulnerability defense policy to the first network device, the method further includes: obtaining the included device identifier of the first network device from the global asset identifier; and the sending the vulnerability defense policy to the first network device is specifically: sending the vulnerability defense policy to the first network device based on the device identifier of the first network device.

Information about the device identifier is carried in the global asset identifier, so that network transmission efficiency can be improved and network resources can be saved.

In a possible design, the method further includes: parsing, by the vulnerability management device, the vulnerability response playbook to obtain the vulnerability defense policy; and sending the vulnerability defense policy to a forwarding device related to the first network device, so that the forwarding device related to the first network device executes the vulnerability defense policy.

In a possible design, before the sending the vulnerability defense policy to a forwarding device related to the first network device, the method further includes: obtaining, by the vulnerability management device, a device identifier of the first network device and network topology information of the controlled network; and determining, by the vulnerability management device based on the network topology information, the forwarding device related to the first network device.

For a vulnerability of a network device that is hardly repaired with a patch in a short time, a vulnerability defense policy may be executed on the forwarding device related to the network device, so as to isolate risky data and devices for the network device, thereby preventing the network device from being attacked.

In a possible design, the obtaining, by the vulnerability management device, a device identifier of the first network device is specifically: obtaining, by the vulnerability management device, the device identifier of the first network device based on the asset identifier in the asset information, where the asset identifier is a global asset identifier, the global asset identifier includes the device identifier of the first network device, the global asset identifier is unique in the range of the controlled network, and the vulnerability management device obtains the device identifier of the first network device based on the global asset identifier; or the asset identifier is a local asset identifier, the local asset identifier is unique in the first network device, and the vulnerability management device obtains the device identifier of the first network device based on a correspondence between the local asset identifier and the device identifier.

In a possible design, the vulnerability defense policy includes an access control list (ACL)-based access control policy, a regular filtering policy based on a feature string, and/or an intrusion prevention system (IPS) signature-based protection policy.

According to a second aspect, a vulnerability management device is provided. The device includes: a first obtaining unit, configured to obtain asset information of an asset of a first network device, where the asset information includes an asset identifier, an asset model, and an asset version, and the first network device is located in a range of a controlled network; a second obtaining unit, configured to obtain, based on the asset model and the asset version in the asset information, vulnerability information corresponding to the asset information; and a first determining unit, configured to determine a vulnerability response playbook (playbook) corresponding to the vulnerability information, where the vulnerability response playbook is used to execute a vulnerability defense policy for the first network device after being parsed.

In a possible design, that the second obtaining unit obtains vulnerability information corresponding to the asset information includes: finding, based on the asset model and the asset version in the asset information, vulnerability information corresponding to the asset model and the asset version in the asset information in a correspondence between the vulnerability information and a combination of the asset model and the asset version; and determining a correspondence between the asset identifier and the vulnerability information based on the correspondence between the vulnerability information and the combination of the asset model and the asset version, and the asset identifier, the asset model, and the asset version in the asset information.

In a possible design, that the first determining unit determines a vulnerability response playbook (playbook) corresponding to the vulnerability information includes: determining, based on the correspondence between the asset identifier and the vulnerability information and the correspondence between the vulnerability information and the vulnerability response playbook, the vulnerability response playbook corresponding to the asset identifier in the asset information; and using the determined vulnerability response playbook as the vulnerability response playbook corresponding to the vulnerability information.

In a possible design, the device further includes: a parsing unit, configured to parse the vulnerability response playbook to obtain the vulnerability defense policy; and a sending unit, configured to send the vulnerability defense policy to the first network device based on the asset identifier in the asset information, so that the first network device executes the vulnerability defense policy.

In a possible design, the asset identifier in the asset information is a global asset identifier, the global asset identifier includes a device identifier of the first network device, and the global asset identifier is unique in the range of the controlled network; and before the sending unit sends the vulnerability defense policy to the first network device, the device further includes: the first obtaining unit that obtains the included device identifier of the first network device from the global asset identifier; and that the sending unit sends the vulnerability defense policy to the first network device is specifically: sending the vulnerability defense policy to the first network device based on the device identifier of the first network device.

Information about the device identifier is carried in the global asset identifier, so that network transmission efficiency can be improved and network resources can be saved.

In a possible design, the device further includes: a parsing unit, configured to parse the vulnerability response playbook to obtain the vulnerability defense policy; and a sending unit, configured to send the vulnerability defense policy to a forwarding device related to the first network device, so that the forwarding device related to the first network device executes the vulnerability defense policy.

In a possible design, before the sending unit sends the vulnerability defense policy to the forwarding device related to the first network device, the device further includes: the first obtaining unit that obtains a device identifier of the first network device and network topology information of the controlled network; and a second determining unit, configured to determine, based on the network topology information, the forwarding device related to the first network device.

For a vulnerability of a network device that is hardly repaired with a patch in a short time, a vulnerability defense policy may be executed on the forwarding device related to the network device, so as to isolate risky data and devices for the network device, thereby preventing the network device from being attacked.

In a possible design, that the first obtaining unit obtains the device identifier of the first network device is specifically: obtaining the device identifier of the first network device based on the asset identifier in the asset information, where the asset identifier is a global asset identifier, the global asset identifier includes the device identifier of the first network device, the global asset identifier is unique in the range of the controlled network, and the first obtaining unit obtains the device identifier of the first network device based on the global asset identifier; or the asset identifier is a local asset identifier, the local asset identifier is unique in the first network device, and the first obtaining unit obtains the device identifier of the first network device based on a correspondence between the local asset identifier and the device identifier.

In a possible design, the vulnerability defense policy includes an access control list (ACL)-based access control policy, a regular filtering policy based on a feature string, and/or an intrusion prevention system (IPS) signature-based protection policy.

According to a third aspect, a vulnerability management device is provided, including a processor and a memory, where the memory is configured to store a computer program, and the processor is configured to invoke the computer program stored in the memory to perform the corresponding method described in any possible design in the first aspect.

According to a fourth aspect, a computer-readable storage medium is provided, where the storage medium stores a computer program, which is used to perform the corresponding method described in any possible design in the first aspect.

According to a fifth aspect, a computer program product including instructions is provided. When the instructions are run on a computer, the computer is enabled to perform the method in any one of the first aspect or the possible implementations of the first aspect.

According to a sixth aspect, an embodiment of this application provides a chip. The chip includes a memory and a processor. The memory is configured to store computer instructions, and the processor is configured to invoke the computer instructions from the memory and run the computer instructions, to perform the method in any one of the first aspect and the possible implementations of the first aspect.

### BRIEF DESCRIPTION OF DRAWINGS

FIG. 1 is a schematic diagram of a structure of a vulnerability management system according to a technical solution;
FIG. 2 is a schematic diagram of a structure of a network system used to implement network vulnerability defense according to an embodiment of this application;
FIG. 3 is a schematic flowchart of a security vulnerability defense method according to an embodiment of this application;
FIG. 4 is a schematic diagram of a structure of a vulnerability management device according to an embodiment of this application; and

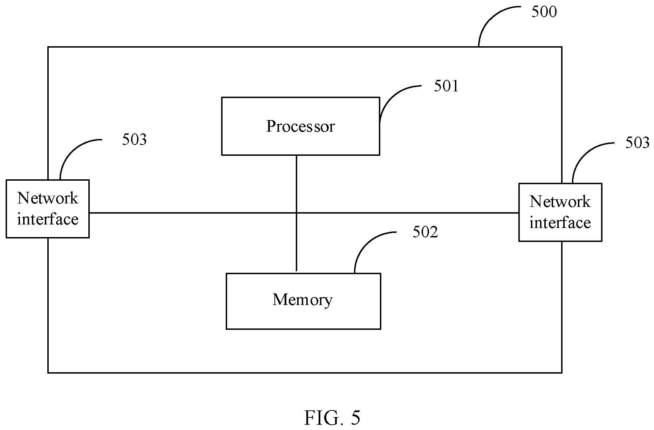

FIG. 5 is a schematic diagram of a structure of another vulnerability management device according to an embodiment of this application.

### DESCRIPTION OF EMBODIMENTS

To make the objectives, technical solutions, and advantages of this application clearer, the following further describes embodiments of this application in detail with reference to the accompanying drawings.

An application scenario described in the embodiments of this application is intended to more clearly describe the technical solutions of the embodiments of this application, and does not constitute a limitation on the technical solutions provided in the embodiments of this application. A Person of ordinary skill in the art may learn that the technical solutions provided in the embodiments of this application are also applicable to a similar technical problem as a network architecture evolves and a new application scenario emerges.

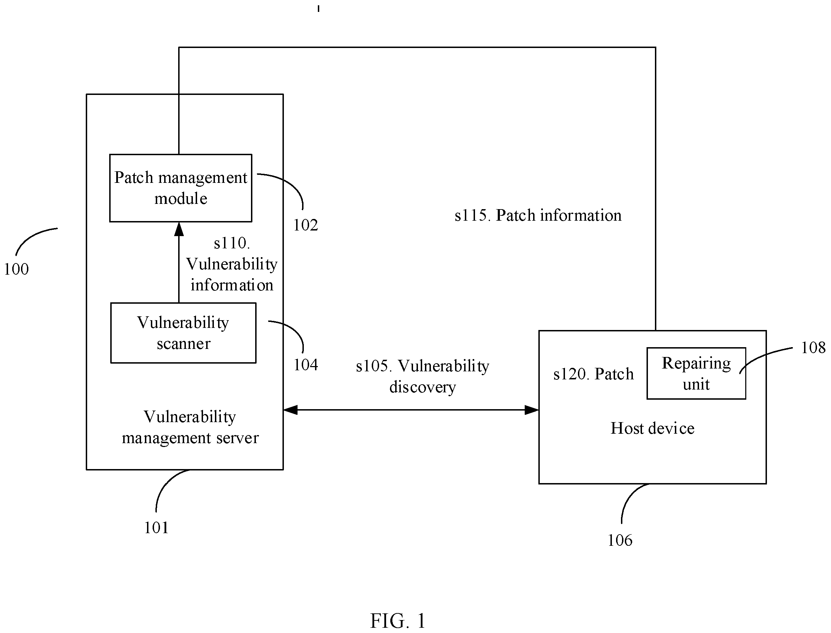

FIG. 1 is a schematic diagram of a structure of a vulnerability management system 100 according to a related technical solution, and the vulnerability management system 100 is used to implement vulnerability scanning and patch repair on a host. The vulnerability management system 100 includes a host device 106 and a vulnerability management server 101. The vulnerability management server 101 includes a vulnerability scanner 104 and a patch management module 102. Optionally, the vulnerability scanner 104 and the patch management module 102 are implemented by using software. For example, the vulnerability scanner is a vulnerability scanner NESSUS launched by Tenable, an open source scanning tool Nmap, or a network tool netcat of a Unix operating system platform. For example, the patch management module is SolarWinds launched by SolarWinds, or a software module independently developed by another network management party. Optionally, the vulnerability scanner 104 and the patch management module 102 may be integrated into a network management system NetView launched by IBM or a network management system OpenView launched by HP.

The host device 106 may be, for example, user equipment such as an intelligent terminal, a tablet computer, or a desktop computer, or may be an enterprise-class network management device.

The vulnerability scanner 104 may detect various types of security vulnerabilities, such as a system vulnerability, a security software vulnerability, or an application software vulnerability, in the host device 106 by monitoring and scanning the host device 106 through the network. The vulnerability scanner 104 sends discovered vulnerability information of the host device 106 to the patch management module 102. The patch management module 102 determines, based on the vulnerability information, whether patch information used to repair a corresponding vulnerability exists, and if the corresponding patch information exists, delivers the patch information to the host device 106. The host device 106 includes a repairing unit 108. The repairing unit 108 patches the host device by using the patch information received by the host device 106, to repair a system vulnerability. For interaction between devices or units of devices in the vulnerability management system 100, refer to steps s105 to s120 in FIG. 1.

The vulnerability management system 100 can remotely monitor and repair a security vulnerability existing in the host device 106, thereby reducing, to some extent, a risk of a network host being attacked. However, in one aspect, for some newly emerging vulnerabilities, it is difficult to provide patches in a timely manner. Therefore, the foregoing manner usually cannot effectively resist hacker attacks, and consequently, a network security problem is caused. In another aspect, in current network composition, in addition to adverse impact on a terminal host, a network vulnerability further affects, to a great extent, other key network devices in the network, such as a server and software and hardware thereof, a router, a switch, and a security firewall. In this case, performing security scanning only on a host system still cannot effectively defend against a network-wide vulnerability.

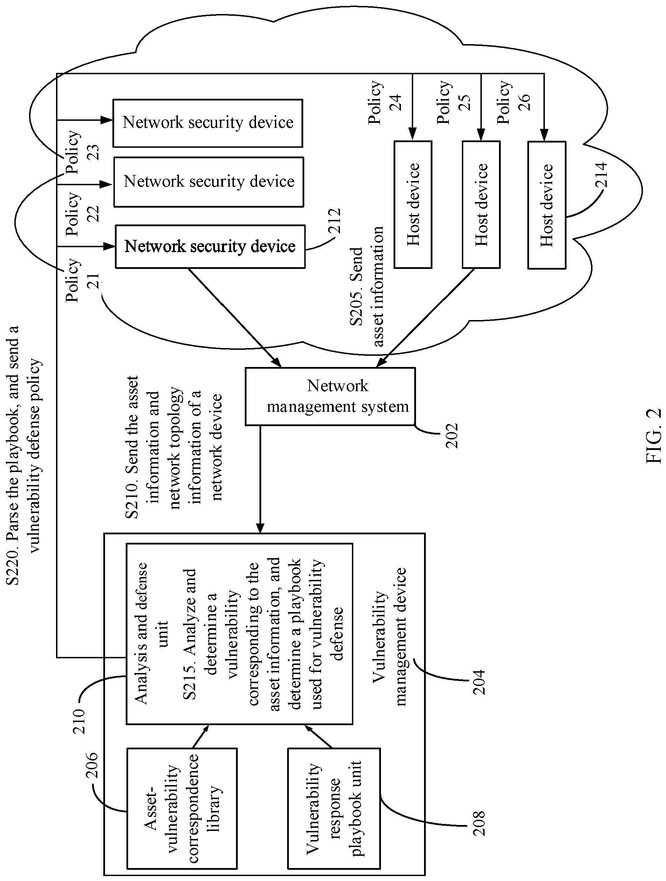

FIG. 2 is a schematic diagram of a structure of a network system used to implement security vulnerability defense according to an embodiment of this application. The network system includes a plurality of host devices 214, a plurality of network security devices 212, a network management system 202, and a vulnerability management device 204. The network security device 212 may be, for example, a device that has a specific security defense capability in a network, such as a security gateway, a firewall, a router, or a switch. The host device 214 and/or the network security device 212 send/sends asset information of a related asset on the device to the network management system 202, as shown in S205. In a possible implementation, another type of device that needs to perform vulnerability analysis and defense in the network may alternatively send asset information of a related asset on the device to the network management system 202. This may be specifically determined with reference to an actual application scenario.

Optionally, the asset includes either or both of a physical asset and a logical asset. Optionally, the physical asset is a device in the network or hardware or a component on a device, and the logical asset is software running on a device in the network or information stored by a device in a communications network. In an example, the physical asset includes a multi-core CPU, or a solid-state drive (solid-state drive, SSD) array, and the logical asset includes an operating system, a software application, and the like on a defense device in a network. The asset is related to a model and a version thereof. For example, for the same host device 214, an operating system thereof and a software application A that runs on the system are different assets, and the software application A and a software application B running on the same host system are also different assets. For another example, for a host device 214 including two virtual machines, although the same software application A separately runs on the two virtual machines, because the software application A that runs on different virtual machines has different versions, the foregoing two software applications A of different versions are still considered as different assets. Two software applications of different models that respectively run on two host devices 214 are different assets, and two software applications of the same model but different versions that run on the two host devices 214 are also different assets. However, if an asset is determined based on only an asset model and an asset version, assets of the same model and the same version that respectively run on two host devices 214 cannot be distinguished. Alternatively, for a host device 214 that includes two virtual machines, two assets of the same model and the same version that respectively run on the two virtual machines cannot be distinguished. To this end, the asset may use an asset identifier to distinguish a plurality of assets of the same model and the same version. The asset identifier may be a global asset identifier. The global asset identifier is unique within a range of a controlled network, and can uniquely identify a specific asset on a specific network device throughout the network. In a possible implementation, the global asset identifier may include a device identifier of the network device to which the asset belongs. The asset identifier may alternatively be a local asset identifier. The local asset identifier is unique within a particular network device, such as the host device 214 or the network security device 212, to at least ensure that a particular asset can be uniquely identified within the same network device.

The asset may be represented by using asset information, and the asset information includes at least an asset identifier, an asset model, and an asset version. For example, the asset information is represented as <asset identifier, asset model, asset version>. Each network device, such as the host device 214 or the network security device 212, may determine one or more assets on which security vulnerability defense needs to be performed. The network device may send, to the network management system 202, asset information of an asset on which security vulnerability defense needs to be performed. For example, the sending may be performed periodically based on a specific time period, or may be performed aperiodically when, for example, a specific condition is triggered, for example, a quantity of vulnerabilities discovered within a specific time period meets a threshold, or a key vulnerability list is hit, or a total quantity of discovered vulnerabilities exceeds a preset value. In an actual application scenario, the network device may send pieces of asset information of assets one by one, or may send a plurality of pieces of asset information of assets at a time, to improve sending efficiency. When the plurality of pieces of asset information of assets are sent, a specific range of sending each time may be determined based on an actual requirement. For example, asset information of all assets that need to be detected for a vulnerability may be included, or asset information of a specified asset that matches the preset rule is sent according to a rule preset by the network management system 202, or asset information of some assets is sent based on asset priorities. For ease of description, it is defined herein that one or more pieces of asset information sent each time constitute one asset information group.

For clearer description, a representation form of the asset information group sent by the host device 214 at a time is given below as an example. In a possible implementation, the host device 214 may send the asset information group to the network management system 202:
<host device A-ZC1, Office 2017, V1.0>,
<host device A-ZC2, Office 2017, V1.1>,
<host device A-ZC3, Google Chrome, V3.1.2>, or
<host device A-ZC4, Access Client, V4.5.1>.

The representation form of the asset information group is only used as an example. In actual application, a specific implementation form, a quantity, and the like of an asset identifier, an asset model, and an asset version may be determined as required. For example, the asset identifier may be represented by using a unique 8-bit binary code in the entire network. For example, "host device A-ZC1" is represented as 10001001 instead, and "host device A-ZC2" is represented as 10001010 instead. For example, an identifier correspondence table is established based on a combination of an asset model and an asset version, for example, "Office 2017, V1.0" corresponds to an identifier 1001, and "Office 2017, V1.1" corresponds to an identifier 1010. <host device A-ZC1, Office 2017, V1.0> in the asset information group may be represented as <10001001, 1001>, and <host device A-ZC2, Office 2017, V1.1> may be represented as <10001010, 1010>, thereby reducing bandwidth resources required to send data of the asset information group. It should be noted that regardless of which specific representation form of the asset information group is used, it should be ensured that the network management system 202 or another possible system that receives corresponding asset information understands a corresponding parsing rule.

As shown in S205 in FIG. 2, the network management system 202 receives the asset information group sent by the host device 214. When one or more pieces of asset information in the asset information group include a local asset identifier or include a global asset identifier that does not include a device identifier, the network management system 202 determines a device identifier, of the host device 214, separately corresponding to the one or more pieces of asset information. When one or more pieces of asset information include a global asset identifier, and the global asset identifier includes a device identifier of the host device 214, the network management system 202 may obtain the device identifier from the global asset identifier, and does not need to determine the device identifier for the one or more pieces of asset information based on other information. In a possible implementation, the network management system 202 further determines network topology information of the host device 214, where the network topology information is address information, path information, and/or the like of another network device related to the host device 214. The another network device may be, for example, a forwarding device related to the host device 214, such as a network security device 212 such as a network management firewall, a router, and a switch, so as to subsequently directly send a vulnerability emergency defense policy to the network security device 212 related to the host device, thereby at least ensuring that the host device 214 is secure to use before a vulnerability patch is installed. The network topology information may be automatically obtained by using the network management system 202, or may be manually configured by a network administrator after the asset information group is received. As shown in S210, the network management system 202 sends the asset information group of the host device 214 and the corresponding network topology information and/or device identifier to the vulnerability management device 204. Optionally, the network management system 202 generates the network topology information by using a topology discovery mechanism.

The network device that is a vulnerability management object includes the host device 214 and the network security device 212. In the foregoing implementation, only the host device 214 is used as an example. However, it may be understood that the network security device 212 may alternatively send an asset information group of the network security device 212 and the corresponding network topology information and/or device identifier to the vulnerability management device 204 in a similar manner. In some possible implementations, the device identifier of the host device 214 or the network security device 212 that sends the asset information group may be carried by the host device 214 or the network security device 212 and sent to the network management system 202. Alternatively, the network management system 202 locally determines the corresponding device identifier based on information about the host device 214 or the network security device 212 that sends the asset information group. In a possible implementation, another device in the network sends asset information of an asset of the network device to the network management system 202. For example, for the host device 214, a forwarding device related to the host device 214, for example, a gateway firewall configured to protect the host device 214, or a router or a switch configured to forward data to the host device 214, may also find asset information on the host device 214 in some cases by reading and analyzing a data packet that needs to be sent to the host device 214. In the foregoing cases, another device, such as a gateway firewall, a router, or a switch, sends the asset information of the host device 214 to the network management system 202. When sending the asset information, the another device may also send the device identifier of the host device 214, to identify that the asset information belongs to an asset on the host device 214. In a possible implementation, to save bandwidth and improve transmission efficiency, the network management system 202 may further send network topology information of the entire network to the vulnerability management device 204, so that the vulnerability management device 204 can determine, based on the device identifier associated with the asset information group, and the network topology information of the entire network, a forwarding device 212 corresponding to the host device 214 on which a vulnerability defense policy needs to be executed. When the network management system 202 sends the network topology information of the entire network to the vulnerability management device 204, the network management system 202 may periodically or aperiodically update the network topology information for the vulnerability management device 204, so as to ensure validity and reliability of executing the vulnerability defense policy based on the network topology information. The update may be a full or partial update of the topology information for the entire network.

The vulnerability management device 204 includes an asset-vulnerability correspondence library 206, a vulnerability response playbook (English: playbook) unit 208, and an analysis and defense unit 210. The asset-vulnerability correspondence library 206 is configured to store a correspondence between an asset and a vulnerability. The correspondence may be a one-to-one relationship, or may be a one-to-many relationship; to be specific, one asset may include a plurality of vulnerabilities. The correspondence between an asset and a vulnerability may be uniquely indexed by using <asset model, asset version> in the asset information of the asset; in other words, assets of the same asset version and asset model also have the same correspondence between an asset and a vulnerability. The following describes a possible representation form of the correspondence between an asset and a vulnerability:
<Office 2017, V1.0 -vulnerability 1, vulnerability 2, vulnerability 3>,
<Office 2017, V1.1 -vulnerability 4, vulnerability 5>,
<Google Chrome, V3.1.2 - vulnerability 6, vulnerability 7>, or
<Access Client, V4.5.1 -vulnerability 8>.

In the foregoing representation form, different vulnerabilities of the same asset have different ID numbers. For example, ID numbers of vulnerability 1, vulnerability 2, and vulnerability 3 in asset <Office 2017, V1.0> are different. Considering that even though vulnerability models are the same in some cases, disposal manners for the same vulnerability model in different assets are not necessarily the same, in a possible implementation, the same vulnerability of different assets also has different vulnerability identifiers, for example, even if vulnerability 1 and vulnerability 4 have the same model, vulnerability 1 and vulnerability 4 have different vulnerability identifiers because vulnerability 1 and vulnerability 4 respectively belong to different assets. This can facilitate asset vulnerability management. In another possible implementation, when a plurality of vulnerabilities respectively corresponding to different assets are actually the same, if it can be determined that vulnerability defense policies used to defend against the plurality of vulnerabilities are also the same, the same vulnerability identifier may be assigned to the plurality of vulnerabilities, so as to save storage resources.

In another possible implementation, another representation form of the correspondence between an asset and a vulnerability may alternatively be defined as required. For example, corresponding to the representation form of the asset information group, <Office 2017, V1.0 - vulnerability 1, vulnerability 2, vulnerability 3> may alternatively be represented as <1001 - vulnerability 1, vulnerability 2, vulnerability 3>, or <Office 2017, V1.0 - vulnerability 1, vulnerability 2, vulnerability 3> may be split into <Office 2017, V1.0 - vulnerability 1>, <Office 2017, V1.0 - vulnerability 2>, and <Office 2017, V1.0 - vulnerability 3>, or vulnerabilities may be numbered according to a specific predefined rule. A specific representation form may be defined based on actual requirements and scenarios.

In a possible implementation, a correspondence between <asset model, asset version> and a vulnerability may be released by a third party such as a software product manufacturer, a hardware product manufacturer, or a security vulnerability manager, then received or downloaded by the vulnerability management device 204, and stored in a local asset-vulnerability correspondence library 206. In another possible implementation, the third party releases vulnerability prompt information for an asset. After receiving the vulnerability prompt information, the vulnerability management device 204 establishes a correspondence between a corresponding asset and vulnerability, and stores the correspondence in a local asset-vulnerability correspondence library 206. In another possible implementation, the asset-vulnerability correspondence library 206 may not be stored in the vulnerability management device 204, but may be disposed in another device or in the cloud, so as to be directly invoked or temporarily downloaded by the vulnerability management device 204, thereby improving use flexibility and real-time performance of the vulnerability management device 204.

A vulnerability response playbook unit 208 is configured to store a vulnerability response playbook for a vulnerability. The playbook is a language used to manage configuration, deployment, and orchestration of network elements in a network. The language may be used to orchestrate a series of logical operations for one or more network elements, so that the one or more network elements parse and perform the logical operations. An orchestration administrator can orchestrate a set of playbooks used to instruct one or more network element devices to perform a series of specific operations, for example, perform a series of actions related to security defense based on the playbooks. The playbooks enable the orchestration administrator to focus on logic of an orchestration operation, while hiding programming interfaces connecting various systems and instruction implementations of the programming interfaces. A parsing engine that can support parsing of a playbook script language implements interaction and execution of specific programmable instructions and corresponding systems. An emergency response playbook corresponding to a vulnerability is a playbook script of a set of emergency response actions orchestrated for the vulnerability, and is used to first execute a corresponding emergency defense policy at a necessary stage, so as to avoid a malicious attack for the vulnerability during window duration. The necessary stage may be, for example, a time when a vulnerability is discovered but before a patch is released, or a case in which a vulnerability patch is insufficient to cope with a new attack manner, and a patch upgrade is required, or a case in which a vulnerability defense level needs to be increased in an extraordinary period or in an extraordinary situation. The cases enumerated above are used as examples only, and a specific scenario in which a playbook vulnerability defense policy is enabled may be set as required.

A specific emergency defense policy may be selected and designed with reference to an actual application scenario, for example, an access control list (English: access control list, ACL) access control policy, a regular filtering policy based on a feature string, and/or an intrusion prevention system (English: intrusion prevention system, IPS) signature-based protection policy are/is executed. The ACL access control policy may be used to issue an instruction list to a router interface, or the like to instruct a router to perform an acceptance or rejection operation on a packet. In an emergency protection state, for example, an ACL instruction list may be used to restrict the router from accepting only a trusted packet, so that the router is not threatened by a malicious packet. By using the regular filtering policy based on the feature string, for example, security of a user terminal, a gateway firewall, and the like may be ensured by matching with a specified control character string. For example, a feature character string used to represent an unauthorized domain name system (English: domain name system, DNS) may be preset, so as to filter out accesses, attacks, and the like of potential unauthorized users to the system. The IPS signature-based protection policy is mainly used to establish and maintain a feature behavior classification filter based on collected historical vulnerability information and attack features, and the like. For example, the gateway firewall classifies and checks network traffic that passes by and uses a classification filter to detect and block an intrusion behavior, such as an application vulnerability attack, Trojan, spyware, and a suspicious network operation (for example, remote control or adware).

The vulnerability response playbook unit 208 stores a correspondence between a vulnerability of an asset and a playbook. In a possible implementation, the correspondence between the vulnerability and the playbook may be a one-to-one relationship. A correspondence between a vulnerability and a playbook may be uniquely indexed by using <asset model, asset version, vulnerability identifier>; in other words, the same vulnerability identifier of the same asset also has the same correspondence between a vulnerability and a playbook. The following describes a possible representation form of the correspondence between a vulnerability and a playbook:
<Office 2017, VI.0, vulnerability 1 - playbook 1>,
<Office 2017, VI.0, vulnerability 2 - playbook 2>,
<Office 2017, VI.0, vulnerability 3 - playbook 3>,
<Office 2017, V1.1, vulnerability 4 - playbook 4>,
...,
<Access Client, V4.5.1, vulnerability 8 - playbook 8>.

In another possible implementation, when it is determined that playbook scripts orchestrated for a plurality of different vulnerability identifiers are substantially the same, it may be considered that the plurality of different vulnerability identifiers are corresponding to the same playbook. In other words, a correspondence between a plurality of vulnerabilities of a plurality of different assets and a playbook may be a many-to-one relationship in some cases, so as to save storage resources.

In a possible implementation, a playbook corresponding to a vulnerability may be released by a third party. Therefore, the vulnerability response playbook unit 208 may not be in the vulnerability management device 204, but may be disposed in another device or in the cloud, so as to be directly invoked or temporarily downloaded by the vulnerability management device 204.

As described above, asset information of an asset may be represented as <asset identifier, asset model, asset version>. As shown in S215, the analysis and defense unit 210 may analyze and establish a correspondence between an asset identifier and a vulnerability identifier based on <asset model, asset version> and the correspondence between an asset and a vulnerability <asset model, asset version, vulnerability identifier> in the asset information, for example, <asset identifier, asset model, asset version, vulnerability identifier>, or may only perform matching and establish a correspondence: <asset identifier, vulnerability identifier>. When the asset identifier is a global asset identifier that includes a device identifier, the analysis and defense unit 210 may directly determine, based on the asset identifier, a network device of the asset, and establish a correspondence between a specific asset and a vulnerability identifier on the network device. When the asset identifier is a local asset identifier or a global asset identifier that does not include a device identifier, the analysis and defense unit 210 further needs to determine a device identifier corresponding to the asset information that includes the asset identifier, so as to determine a correspondence between a specific asset and a vulnerability identifier on a network device.

The analysis and defense unit 210 may further obtain network topology information of the host device 214 or the network security device 212 that sends the asset information of the asset to determine a forwarding device related to the host device 214 or the network security device 212. The analysis and defense unit 210 may obtain, by using the vulnerability identifier, a playbook script used for emergency disposal and vulnerability defense. As shown in S220, the analysis and defense unit 210 parses the determined playbook script to obtain a vulnerability defense policy for disposing of an asset vulnerability. By using the asset identifier associated with the vulnerability identifier and the device identifier necessary in some of the foregoing cases, it is possible to learn to which network device the parsed vulnerability defense policy needs to be sent and for which asset of the network device the vulnerability defense policy is used to defend against a vulnerability. In some cases, the analysis and defense unit 210 may further send, to one or more forwarding devices related to the network device based on the network topology information corresponding to the network device, a vulnerability defense policy that is obtained after the playbook script is parsed and that is used for defending against a vulnerability. The forwarding device may be, for example, a network security device 212 related to the network device. The host device 214 or the network security device 212 performs a corresponding defense operation based on the received vulnerability defense policy.

In a possible implementation, the analysis and defense unit 210 may alternatively not parse the playbook script, but directly send the playbook script to the corresponding host device 214 or network security device 212, and the host device 214 or the network security device 212 parses the playbook script, so as to execute the corresponding vulnerability defense policy to ensure operation security of a network system.

In another possible implementation, the vulnerability management device 204 first sends, to the network management system 202, a playbook script used to repair one or more security vulnerabilities, and then the network management system 202 sends the playbook script to the host device 214 or the network security device 212, or the network management system 202 sends, to the host device 214 or the network security device 212, a vulnerability defense policy generated after the playbook script is parsed. Alternatively, the vulnerability management device 204 does not exist independently of the network management system 202, but is integrated as a part of the network management system 202, and is configured to implement corresponding vulnerability analysis and defense functions. Alternatively, the vulnerability management device 204 may be integrated into another device or system of the network.

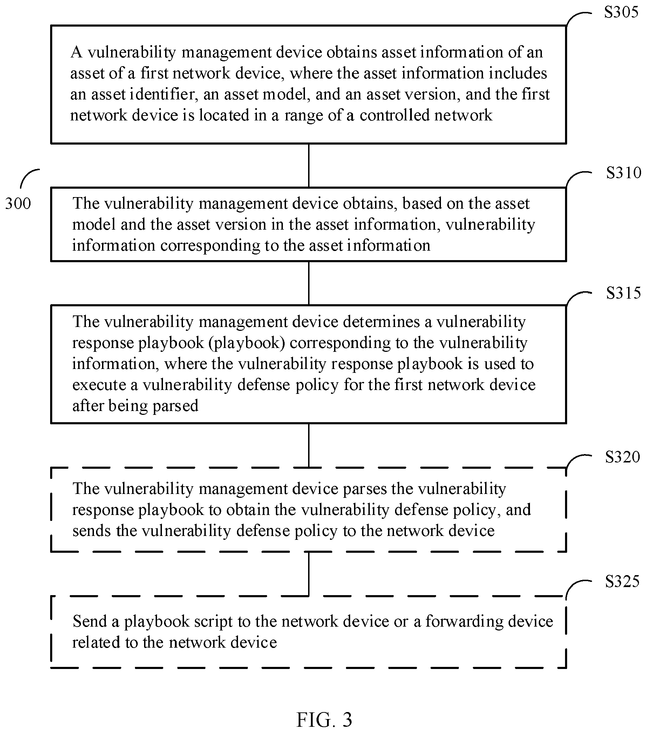

FIG. 3 is a schematic flowchart of a security vulnerability defense method 300 according to an embodiment of this application. For example, the method 300 may be performed by the vulnerability management device 204 in FIG. 2, or may be performed by a device or unit that is integrated in a network management system 202 or another network device and that can implement a corresponding vulnerability defense function. The method 300 includes the following content.

S305. A vulnerability management device obtains asset information of an asset of a first network device, where the asset information includes an asset identifier, an asset model, and an asset version, and the first network device is located in a range of a controlled network.

In a possible implementation, the vulnerability management device 204 obtains asset information of a related asset in the network device. The asset information of the asset of the network device may be obtained by the network device, or may be obtained by another device in the network. In a case of obtaining the asset information from the another device, for example, when the network device is a host device 214, another device related to the host device 214, such as a forwarding device, may find asset information corresponding to an asset on the host device 214 by reading and analyzing a data packet and the like that needs to be sent to the host device 214. The network device may be, for example, a network security device 212 or a host device 214 shown in FIG. 2. A host device 214 is used as an example. The host device 214 may include a key asset on which vulnerability defense needs to be performed. The asset may be described by using corresponding asset information, and the asset information may include an asset identifier, an asset model, and an asset version. Optionally, the asset information may alternatively include information of another type, provided that different assets can be distinguished by using information of plenty of dimensions. Information that is specifically included may be determined based on an actual application scenario. One host device 214 may alternatively include a plurality of assets. In this case, the vulnerability management device 204 needs to obtain a plurality of groups of asset information respectively corresponding to the plurality of assets.

The asset identifier is used to identify different assets, so as to quickly deliver an asset vulnerability defense policy to a corresponding network device pertinently. For example, the asset identifier is a global asset identifier, and the global asset identifier is unique within the range of the controlled network. In a possible implementation, the global asset identifier includes a device identifier of the first network device. For another example, the asset identifier is a local asset identifier, and the local asset identifier is unique in the first network device. When a network device has a plurality of assets on which vulnerability defense needs to be performed, the vulnerability management device 204 can obtain a plurality of pieces of asset information respectively corresponding to the plurality of assets. The device identifier of the network device may be, for example, a device ID, and an internet protocol (English: internet protocol, IP) address or a media access control (English: media access control, MAC) address of the device. The device identifier may be sent by the network security device 212 or the host device 214, or may be determined and added by the network management system 202 based on sender information used when the asset information is received.

S310. The vulnerability management device obtains, based on the asset model and the asset version in the asset information, vulnerability information corresponding to the asset information.

The analysis and defense unit 210 of the vulnerability management device 204 may determine, based on a correspondence between an asset of the network device and a vulnerability, one or more vulnerabilities of the asset in the network device on which defense needs to be performed. Specifically, the asset-vulnerability correspondence library 206 may store a correspondence between a combination <asset model, asset version> and a vulnerability. The correspondence may be a one-to-one relationship, or may be a one-to-many relationship, that is, one combination <asset model, asset version> corresponds to a plurality of vulnerabilities. A representation form of the correspondence between the combination <asset model, asset version> and a vulnerability may be <asset model, asset version-vulnerability identifier 1, ..., vulnerability identifier N>, where N represents a quantity of vulnerabilities corresponding to the asset information. The vulnerability identifier is used to uniquely identify a specific vulnerability in an asset. In another possible implementation, the vulnerability information may alternatively be represented by using other data, for example, a vulnerability type and a vulnerability name, provided that different types of vulnerabilities can be represented differently.

When the information sent by the network device is the asset information, the analysis and defense unit 210 may further determine, by determining the device identifier of the network device that sends the asset information, that an asset of the network device that has the device identifier in the network has a vulnerability of a corresponding ID number.

The analysis and defense unit 210 may establish a correspondence <asset identifier -- vulnerability identifier 1, ..., vulnerability identifier N> in an associated manner based on the obtained correspondence <asset model, asset version -- vulnerability identifier 1, ..., vulnerability identifier N> between the combination <asset model, asset version> and the vulnerability, and a direct correspondence between the asset identifier and <asset model, asset version> in the asset information. Because an asset identifier may identify at least different assets of the same device differently, one or more vulnerabilities corresponding to the assets of the network device may be determined based on the device identifier of the network device that sends the asset information and the correspondence between the asset identifier of the asset information and the one or more vulnerability identifiers. Alternatively, when the asset identifier is a global asset identifier that includes a device identifier, the analysis and defense unit 210 may directly determine, based on the global asset identifier, one or more vulnerabilities corresponding to an asset of the network device, instead of obtaining the device identifier of the network device separately.

When types of a plurality of vulnerabilities in different assets are actually the same, the same vulnerability identifier may be set for the plurality of vulnerabilities with reference to an actual scenario, for example, when it is determined that security defense policies for the plurality of vulnerabilities are the same, so that storage space is saved, and storage efficiency is improved. Alternatively, different vulnerability identifiers may be set for the plurality of vulnerabilities, for example, when the plurality of vulnerabilities have the same type, but different corresponding defense policies are used in different assets for the plurality of vulnerabilities; or when even though the defense policies are the same, specific operation steps performed to implement a corresponding defense policy are different; or when even if the defense policy, the corresponding execution steps, and the like are substantially the same, different vulnerability identifiers may still be set for a plurality of vulnerabilities of the same type that respectively belong to different assets for purposes such as ease of management and execution.

It should be noted that, when there are a plurality of assets on which vulnerability defense needs to be performed on the network device, there are a plurality of groups of correspondences between asset information associated with the network device and vulnerability information.

In a possible implementation, a correspondence library between the asset information and the vulnerability may be provided and maintained by a third party, and may be stored in the cloud or another network device for the vulnerability management device 204 to invoke.

S315. The vulnerability management device determines a vulnerability response playbook (playbook) corresponding to the vulnerability information, where the vulnerability response playbook is used to execute a vulnerability defense policy for the first network device after being parsed.

Optionally, the vulnerability management device 204 establishes a corresponding vulnerability response playbook for each vulnerability identifier. The correspondence between the vulnerability identifier and the vulnerability response playbook may be stored in the vulnerability response playbook unit 208. The correspondence between the vulnerability identifier and the vulnerability response playbook may be a one-to-one relationship, or may be a one-to-many relationship. For example, there are a plurality of defense policies used to dispose of one vulnerability, and the plurality of defense policies are orchestrated in a plurality of playbook scripts. Alternatively, the correspondence between the vulnerability identifier and the vulnerability response playbook may be a many-to-one relationship. For example, disposal and defense policies for a plurality of vulnerabilities are substantially the same. In this case, a plurality of vulnerability identifiers with the same disposal and defense policy may all point to the same playbook script, so as to save storage space.

In a possible implementation, the analysis and defense unit 210 analyzes and determines, by reading the correspondence between the asset information and the vulnerability identifier stored in the asset-vulnerability correspondence library 206, that is, <asset model, asset version -- vulnerability identifier 1, ..., vulnerability identifier N> and reading the correspondence between the vulnerability identifier and the playbook stored in the vulnerability response playbook unit 208, a playbook script used for emergency defense against one or more vulnerabilities in a currently analyzed asset, and determines, by determining a device identifier of the network device corresponding to the asset, to apply the playbook script to the network device indicated by the device identifier. In another possible implementation, the analysis and defense unit 210 determines, by reading the correspondence between the global asset identifier that includes the device identifier and the vulnerability identifier stored in the asset-vulnerability correspondence library 206, that is, <asset identifier -- vulnerability identifier 1, ..., vulnerability identifier N> and reading the correspondence between the vulnerability identifier and the playbook stored in the vulnerability response playbook unit 208, a playbook script used for emergency defense against one or more vulnerabilities in assets corresponding to the current global asset identifier.

It should be noted that, when there are a plurality of assets on which vulnerability defense needs to be performed on the network device, a playbook script used to defend against one or more vulnerabilities in each asset is separately determined.

In a possible implementation, the analysis and defense unit 210 may determine, based on the network topology information of the network device, one or more forwarding devices related to the network device that need to apply the playbook script to execute the vulnerability defense policy. The analysis and defense unit 210 may determine, based on a vulnerability type corresponding to the asset, whether a sending object of the playbook script used to execute the vulnerability defense policy is the network device, the forwarding device related to the network device, or both of the two.

In a possible implementation, the correspondence between the vulnerability identifier and the vulnerability response playbook script, and specific orchestration content of the playbook may be provided and maintained by a third party, or may be stored in the cloud or another network device for the vulnerability management device 204 to invoke. The playbook script is used to perform vulnerability defense on an asset of the network device after being parsed.

Optionally, in another embodiment of this application, the method 300 further includes the following content:
S320. The vulnerability management device parses the vulnerability response playbook to obtain the vulnerability defense policy, and sends the vulnerability defense policy to the network device.

After determining one or more playbook scripts used to defend against one or more vulnerabilities in the asset of the network device, the vulnerability management device 204 parses the one or more playbook scripts to determine one or more defense policies for defending against the vulnerability in the asset of the network device, and sends the one or more defense policies to the network device or a forwarding device related to the network device for execution.

Optionally, in another embodiment of this application, S320 may not be performed, but S325 may be performed instead. S325 includes the following content:
S325. Send the playbook script to the network device or a forwarding device related to the network device.

In this case, the vulnerability management device 204 does not perform a parsing operation on the playbook script, but sends the playbook script to the corresponding network device, and the network device side performs the parsing operation of the script, and performs a corresponding operation according to the vulnerability defense policy obtained after the parsing.

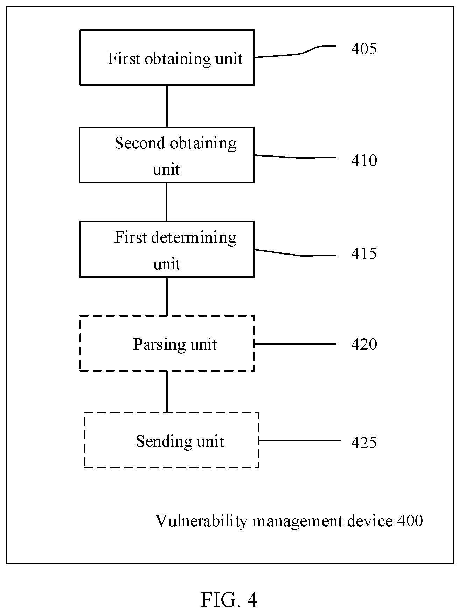

An embodiment of this application further provides a vulnerability management device 400, which is shown in FIG. 4. The device 400 includes a first obtaining unit 405, a second obtaining unit 410, and a vulnerability response unit 415. The device 400 may be, for example, the vulnerability management device 204 shown in FIG. 2, or a device or unit that is integrated in the network management system 202 or another network system and that can implement a corresponding vulnerability defense function.

The first obtaining unit 405 is configured to obtain asset information of an asset of a first network device, where the asset information includes an asset identifier, an asset model, and an asset version, and the first network device is located in a range of a controlled network.

The asset information may be obtained, for example, from a host device 214 and/or a network security device 212. In some possible implementations, a device identifier corresponding to the asset information may be further obtained together.

The second obtaining unit 410 is configured to obtain, based on the asset model and the asset version in the asset information, vulnerability information corresponding to the asset information.

The correspondence between the asset information and the vulnerability information may be stored in an asset-vulnerability correspondence library. The correspondence library may be stored inside the device 400, for example, the asset-vulnerability correspondence library 206 shown in FIG. 2, or may be stored in a third-party device, a cloud server, or the like. The asset-vulnerability correspondence library may be updated and maintained by a third party. The second obtaining unit 410 reads and invokes a prestored correspondence between asset information and the vulnerability information based on the asset information obtained by the first obtaining unit, so as to obtain the vulnerability information corresponding to the asset information.

The first determining unit 415 is configured to determine a vulnerability response playbook (playbook) corresponding to the vulnerability information, where the vulnerability response playbook is used to execute a vulnerability defense policy for the first network device after being parsed.

The correspondence between the vulnerability information and the vulnerability response playbook may be stored in the device 400, for example, in the vulnerability response playbook unit 208 shown in FIG. 2, or may be stored in a third-party device, a cloud server, or the like. Each correspondence between the vulnerability information and the vulnerability response playbook may be updated and maintained by a third party. The playbook is configured to orchestrate a vulnerability defense policy script executed for the vulnerability in the asset of the network device.

In a possible implementation, that the second obtaining unit 410 obtains vulnerability information corresponding to the asset information includes: finding, based on the asset model and the asset version in the asset information, vulnerability information corresponding to the asset model and the asset version in the asset information in a correspondence between the vulnerability information and a combination of the asset model and the asset version.

In a possible implementation, that the first determining unit 415 determines a vulnerability response playbook (playbook) corresponding to the vulnerability information includes: determining, based on the correspondence between the asset identifier and the vulnerability information and the correspondence between the vulnerability information and the vulnerability response playbook, the vulnerability response playbook corresponding to the asset identifier in the asset information; and using the determined vulnerability response playbook as the vulnerability response playbook corresponding to the vulnerability information.

The second obtaining unit 410 determines a correspondence between the asset identifier and the vulnerability information based on the correspondence between the vulnerability information and the combination of the asset model and the asset version, and the asset identifier, the asset model, and the asset version in the asset information.

In a possible implementation, the device 400 may further include a parsing unit 420 and a sending unit 425. The parsing unit 420 is configured to parse the vulnerability response playbook to obtain the vulnerability defense policy. The sending unit 425 is configured to send the vulnerability defense policy to the network device based on the asset identifier in the asset information, so that the network device executes the vulnerability defense policy. The asset identifier may be a global asset identifier, or may be a local asset identifier. The network device may be, for example, the host device 214 shown in FIG. 2, or the network security device 212, or a forwarding device related to the host device 214 or the network security device 212.

In a possible embodiment, the first obtaining unit 405 and the second obtaining unit 410 may be the same obtaining unit, and are configured to perform corresponding functions of the units 405 and 410.

An embodiment of this application further provides a schematic diagram of a structure of a vulnerability management device 500. The device 500 includes a processor 501, a memory 502, and a network interface 503. The device 500 may be, for example, the vulnerability management device 204 shown in FIG. 2 or the vulnerability management device 400 shown in FIG. 4.

The network interface 503 is configured to receive information from the network device and/or send required information to the network device. The network interface 503 may send the information received from the network to the processor 501 and/or the memory 502, or may send, to the network, information processed or generated by the processor 501. The information is, for example, asset information of an asset or a playbook script. The network interface 503 may be a wired interface, for example, a fiber distributed data interface (fiber distributed data interface, FDDI), a gigabit ethernet (gigabit ethernet, GE) interface. Alternatively, the network interface 503 may be a wireless interface.

The memory 502 is configured to store a computer program and data. The memory 502 includes, but is not limited to, a random access memory (random access memory, RAM), a read-only memory (read-only memory, ROM), an erasable programmable read-only memory (erasable programmable read-only memory, EPROM), a flash memory, or an optical memory. The memory 502 stores code of an operating system.

The processor 501 may be one or more CPUs, and the CPU may be a single-core CPU, or may be a multi-core CPU. The processor 501 is configured to: read the computer program and data stored in the memory 502, and perform, based on the computer program and the data, the security vulnerability defense method 300 described in the foregoing embodiment.

An embodiment of this application further provides a computer-readable storage medium. The storage medium stores a computer program, and the computer program is used to perform the security vulnerability defense method 300 described in the foregoing embodiment.

It should be understood that sequence numbers of the foregoing processes do not mean execution sequences in various embodiments of this application unless explicitly specified by using a text description. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, all or some of units and algorithm steps may be implemented by using software, hardware, firmware, or any combination thereof. How these functions are implemented depends on particular applications and design constraints of the technical solutions. A Person skilled in the art may use a corresponding method to implement the described functions for each particular application. For example, when software is used to implement the embodiments, some or all of the embodiments may be implemented in a form of a computer program product. The computer program product includes one or more computer instructions. When the computer program instructions are loaded and executed on the computer, some or all of the procedure or functions according to the embodiments of this application are generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium (for example, a solid-state disk (solid-state disk, SSD)), or the like.

All parts in this specification are described in a progressive manner, and for same or similar parts in various method and system embodiments, reference may be made to each other. Especially, some system embodiments are basically similar to the method embodiments, and therefore are described briefly. For related parts, refer to descriptions in the method embodiments.

The foregoing embodiments are merely intended for describing the technical solutions of this application, rather than limiting this application. Although this application is described in detail with reference to the foregoing embodiments, a person of ordinary skill in the art should further understand that any modification or variation made based on the technical solutions recorded in the foregoing embodiments, or equivalent replacement of some technical features thereof shall fall within the scope of the technical solutions in the embodiments of this application.

## Claims

1. A security vulnerability defense method, wherein the method comprises:
obtaining, by a vulnerability management device, asset information of an asset of a first network device, wherein the asset information comprises an asset identifier, an asset model, and an asset version, and the first network device is located in a range of a controlled network;
obtaining, by the vulnerability management device based on the asset model and the asset version in the asset information, vulnerability information corresponding to the asset information; and
determining, by the vulnerability management device, a vulnerability response playbook (playbook) corresponding to the vulnerability information, wherein the vulnerability response playbook is used to execute a vulnerability defense policy for the first network device after being parsed.

2. The method according to claim 1, wherein the obtaining vulnerability information corresponding to the asset information comprises:
finding, by the vulnerability management device based on the asset model and the asset version in the asset information, vulnerability information corresponding to the asset model and the asset version in the asset information in a correspondence between the vulnerability information and a combination of the asset model and the asset version; and
determining, by the vulnerability management device, a correspondence between the asset identifier and the vulnerability information based on the correspondence between the vulnerability information and the combination of the asset model and the asset version, and the asset identifier, the asset model, and the asset version in the asset information.

3. The method according to claim 2, wherein the determining, by the vulnerability management device, a vulnerability response playbook (playbook) corresponding to the vulnerability information comprises:
determining, by the vulnerability management device based on the correspondence between the asset identifier and the vulnerability information and the correspondence between the vulnerability information and the vulnerability response playbook, the vulnerability response playbook corresponding to the asset identifier in the asset information; and
using the determined vulnerability response playbook as the vulnerability response playbook corresponding to the vulnerability information.

4. The method according to any one of claims 1 to 3, wherein the method further comprises:
parsing, by the vulnerability management device, the vulnerability response playbook to obtain the vulnerability defense policy; and
sending, by the vulnerability management device, the vulnerability defense policy to the first network device based on the asset identifier in the asset information, so that the first network device executes the vulnerability defense policy.

5. The method according to claim 4, wherein the asset identifier in the asset information is a global asset identifier, the global asset identifier comprises a device identifier of the first network device, and the global asset identifier is unique in the range of the controlled network; and before the sending the vulnerability defense policy to the first network device, the method further comprises:
obtaining, by the vulnerability management device, the comprised device identifier of the first network device from the global asset identifier; and
the sending the vulnerability defense policy to the first network device is specifically: sending the vulnerability defense policy to the first network device based on the device identifier of the first network device.

6. The method according to any one of claims 1 to 3, wherein the method further comprises:
parsing, by the vulnerability management device, the vulnerability response playbook to obtain the vulnerability defense policy; and
sending the vulnerability defense policy to a forwarding device related to the first network device, so that the forwarding device related to the first network device executes the vulnerability defense policy.

7. The method according to claim 6, wherein before the sending the vulnerability defense policy to a forwarding device related to the first network device, the method further comprises:
obtaining, by the vulnerability management device, a device identifier of the first network device and network topology information of the controlled network; and
determining, by the vulnerability management device based on the network topology information, the forwarding device related to the first network device.

8. The method according to claim 7, wherein the obtaining, by the vulnerability management device, a device identifier of the first network device is specifically:
obtaining, by the vulnerability management device, the device identifier of the first network device based on the asset identifier in the asset information, wherein
the asset identifier is a global asset identifier, the global asset identifier comprises the device identifier of the first network device, the global asset identifier is unique in the range of the controlled network, and the vulnerability management device obtains the device identifier of the first network device based on the global asset identifier; or the asset identifier is a local asset identifier, the local asset identifier is unique in the first network device, and the vulnerability management device obtains the device identifier of the first network device based on a correspondence between the local asset identifier and the device identifier.

9. The method according to any one of claims 1 to 8, wherein the vulnerability defense policy comprises an access control list (ACL)-based access control policy, a regular filtering policy based on a feature string, and/or an intrusion prevention system (IPS) signature-based protection policy.

10. A vulnerability management device, wherein the device comprises:
a first obtaining unit, configured to obtain asset information of an asset of a first network device, wherein the asset information comprises an asset identifier, an asset model, and an asset version, and the first network device is located in a range of a controlled network;
a second obtaining unit, configured to obtain, based on the asset model and the asset version in the asset information, vulnerability information corresponding to the asset information; and
a first determining unit, configured to determine a vulnerability response playbook (playbook) corresponding to the vulnerability information, wherein the vulnerability response playbook is used to execute a vulnerability defense policy for the first network device after being parsed.

11. The vulnerability management device according to claim 10, wherein that the second obtaining unit obtains vulnerability information corresponding to the asset information comprises:
finding, based on the asset model and the asset version in the asset information, vulnerability information corresponding to the asset model and the asset version in the asset information in a correspondence between the vulnerability information and a combination of the asset model and the asset version; and
determining a correspondence between the asset identifier and the vulnerability information based on the correspondence between the vulnerability information and the combination of the asset model and the asset version, and the asset identifier, the asset model, and the asset version in the asset information.

12. The vulnerability management device according to claim 11, wherein that the first determining unit determines a vulnerability response playbook (playbook) corresponding to the vulnerability information comprises:
determining, based on the correspondence between the asset identifier and the vulnerability information and the correspondence between the vulnerability information and the vulnerability response playbook, the vulnerability response playbook corresponding to the asset identifier in the asset information; and
using the determined vulnerability response playbook as the vulnerability response playbook corresponding to the vulnerability information.

13. The vulnerability management device according to any one of claims 10 to 12, wherein the device further comprises:
a parsing unit, configured to parse the vulnerability response playbook to obtain the vulnerability defense policy; and
a sending unit, configured to send the vulnerability defense policy to the first network device based on the asset identifier in the asset information, so that the first network device executes the vulnerability defense policy.

14. The vulnerability management device according to claim 13, wherein the asset identifier in the asset information is a global asset identifier, the global asset identifier comprises a device identifier of the first network device, and the global asset identifier is unique in the range of the controlled network; and before the sending unit sends the vulnerability defense policy to the first network device, the device further comprises:
the first obtaining unit that obtains the comprised device identifier of the first network device from the global asset identifier; and
the sending unit that is configured to send the vulnerability defense policy to the first network device based on the device identifier of the first network device.

15. The device according to any one of claims 10 to 12, wherein the vulnerability management device further comprises:
a parsing unit, configured to parse the vulnerability response playbook to obtain the vulnerability defense policy; and
a sending unit, configured to send the vulnerability defense policy to a forwarding device related to the first network device, so that the forwarding device related to the first network device executes the vulnerability defense policy.

16. The device according to claim 15, wherein
the first obtaining unit is further configured to: before the sending unit sends the vulnerability defense policy to the forwarding device related to the first network device, obtain a device identifier of the first network device and network topology information of the controlled network; and
the vulnerability management device further comprises: a second determining unit, configured to determine, based on the network topology information, the forwarding device related to the first network device.

17. The device according to claim 16, wherein that the first obtaining unit obtains the device identifier of the first network device is specifically:
obtaining the device identifier of the first network device based on the asset identifier in the asset information, wherein
the asset identifier is a global asset identifier, the global asset identifier comprises the device identifier of the first network device, the global asset identifier is unique in the range of the controlled network, and the first obtaining unit obtains the device identifier of the first network device based on the global asset identifier; or the asset identifier is a local asset identifier, the local asset identifier is unique in the first network device, and the first obtaining unit obtains the device identifier of the first network device based on a correspondence between the local asset identifier and the device identifier.

18. A vulnerability management device, comprising a processor and a memory, wherein the memory is configured to store a computer program, and the processor is configured to invoke the computer program stored in the memory to perform the method according to any one of claims 1 to 9.

19. A computer-readable storage medium, wherein the storage medium stores a computer program, and the computer program is used to perform the method according to any one of claims 1 to 9.
